# EUROPÄISCHE PATENTSCHRIFT

(11) **EP 0 859 183 B1**
(45) Veröffentlichungstag und Bekanntmachung des Hinweises auf die Patenterteilung: **26.04.2000**
(21) Anmeldenummer: 98102394.8
(22) Anmeldetag: 12.02.1998
(51) Int. Cl.: F16L 21/03, B28B 21/56, E03F 5/02, E02D 29/12, E04B 1/68, E03F 3/04

(54) **Dichtring für Schachtring-Aufbauten**
Sealing ring for manhole-shaft rings
Anneau d'étanchéité pour anneaux de puits d'accès

(30) Priorität: 13.02.1997 DE 19705483
(43) Veröffentlichungstag der Anmeldung: 19.08.1998
(73) Patentinhaber: ALBERT STEINHOFF GmbH, D-48301 Nottuln (DE)
(72) Erfinder: Steinhoff, Albert, 48301 Nottuln (DE); Grabe, Werner, Dr., 48249 Rorup (DE)
(74) Vertreter: Hoffmeister, Helmut, Dr. Dipl.-Phys.

(56) Entgegenhaltungen:
- EP-A- 0 634 532
- DE-A- 3 136 183
- DE-A- 4 133 763
- DE-A- 4 134 049
- DE-A- 4 315 119

## Beschreibung

Die Erfindung betrifft einen Dichtring, für Schachtring-Aufbauten, der im Bereich der Fügung zwischen Spitzende und Muffenteil zweier aufeinanderliegender Beton-Schachtringe anzuordnen ist, wobei das am Spitzende vorhandene Widerlager im zusammengefügten Zustand der Betonschachtringe den Dichtring kontaktiert, der den Abstand zwischen Widerlager und Muffenteil überbrückt und unter Verformung abdichtet. Die Erfindung betrifft außerdem ein Profilhalbzeug zur Herstellung derartiger Dichtringe sowie Beton-Schachtringe, die mit dem Dichtring ausgestattet sind.

Ein Dichtring zum Abdichten zwischen Spitzende und Muffenteil zweier aufeinanderliegender Schachtringe, die im Bereich der Widerlager angeordnet sind, sind bekannt (DE 43 23 734; Bezugzahl 30 in Fig. 1). Bekannte Dichtringe haben im Querschnitt Keilform und werden auf ein üblicherweise vorhandenes Widerlager am Spitzende aufgezogen. Sie sind weder am Spitzende noch am Muffenteil befestigt. Bei einem Ineinanderschieben der Beton-Schachtringe kann es leicht zu Verdrillungen und Verwerfungen kommen.

Bei Betonrohren werden, abweichend von Betonschachtringen, vorzugsweise verankerte Dichtungen verwendet, die jedoch bei Betonschachtringen im allgemeinen nicht brauchbar sind, da hier veränderte Spitzende-Geometrien der Schachtringe erforderlich sind. Es müssen Schachtringe hergestellt werden, die im Querschnitt nicht mehr den Schachtringen herkömmlicher Gestalt gleichen und kompatibel sind. Dabei genügt es im allgemeinen nicht, kurze Schacht-Dichtungsringe einzusetzen, um dem Widerlager auszuweichen, da eine ausreichende Dichtungskontaktlänge vorhanden sein muß, um eventuelle Lunkerstellen am Spitzende zu überdecken.

Es stellt sich damit die Aufgabe, einen Dichtring, anzugeben, bei dessen Einsatz das am Spitzende eines Schachtringes vorhandene Widerlager berücksichtigt werden kann und bei dem eine ausreichend große Kontaktlänge zum Spitzende vorhanden ist, so daß eventuell vorhandene Lunkerstellen überbrückt werden.

Diese Aufgabe wird gelöst bei einem Dichtring der eingangs genannten Art, der zur Befestigung in der Muffe vorgesehen ist und im Bereich seines Kontaktes mit dem Widerlager eine Schrägschulter mit einer innenliegenden Anlaufschräge aufweist, unter der in einem Teilbereich ein das Widerlager aufeinanderliegenden Betonschachtringen aufnehmender Aufnahmeraum vorgesehen ist, wobei ein das Einfügen erlaubender Teil der Schrägstrecke entlang der Anlaufschräge außerhalb des Teilbereiches für den Aufnahmeraum verbleibt.

Mit der besonderen Gestaltung des Dichtringes werden daher zwei Effekte erzielt: Zum einen kann das vorhandene Widerlager innerhalb der Geometrie des Dichtringes abgedichtet aufgenommen werden, und zum anderen wird während des Einfügens und Einschiebens des Spitzendes eine Führung entlang der Außenschräge ermöglicht, die ein sicheres Eingleiten des Widerlagers in den Aufnahmeraum erlaubt. Dies alles ist kombiniert mit einer hohen Abdichtungswirkung und ausreichend hohen Abdichtfläche zwischen den beiden Beton-Schachtringen und dem Dichtring.

Der vorgenannte Dichtring ist insbesondere für den Einsatz bei Schachtring-Aufbauten konzipiert. Es soll aber nicht ausgeschlossen sein, daß bei ähnlich geformten Betonrohren auch ein Einsatz des Dichtringes in der dargestellten oder in einer modifizierten Form zur Abdichtung von Betonrohr-Elementen erfolgen kann.

Der Dichtring ist mit dem Muffenende eines Schachtringes fest verbunden, wobei sich insbesondere eine an sich bekannte Verankerung mit in das Betonmaterial hineinreichenden Füßen oder eine Verklebung eignen.

Kann davon ausgegangen werden, daß der Aufnahmeraum auch nach der Herstellung frei von Fremdkörpern, insbesondere Kieselsteinen, Betonresten und dergleichen bleibt, so kann der das Widerlager aufnehmende Aufnahmeraum grundsätzlich materialfrei, das heißt leer bleiben.

Es ist auch möglich, den Aufnahmeraum mit pastösem, vorzugsweise thixotropem Material zu füllen, das bei dem Einfügen der zufügenden Schachtringe herausgedrückt wird und die Dichtheit des Schachtring-Aufbaus verbessert. Als solches Material eignen sich beispielsweise Bitumen-Emulsionen oder gelatinöse Stoffe.

Der Aufnahmeraum kann auch mit einem geschäumten Kunststoffmaterial gefüllt sein, das zusammendrückbar oder herausdrängbar ist.

Vorzugsweise wird aus Sicherheitsgründen jedoch der Aufnahmeraum mit einer mit der Anlaufschräge fluchtenden Abdeckung versehen, die gesondert oder integriert mit dem übrigen Material des Dichtringes extrudiert bzw. hergestellt wird. Der Aufnahmeraum kann lediglich mit Luft (oder einem anderen Gas) gefüllt sein, es ist aber auch möglich, daß der Aufnahmeraum mit Kunststoffschaum, vorzugsweise in Form eines Schaumstranges, gefüllt ist. Ein solcher Schaumstrang kann vorzugsweise mit dem üblichen Ringmaterial coextrudiert sein.

Die Größe des Profilquerschnittes ergibt sich aus den Erfordernissen der Abdichtung, den Genauigkeitsanforderungen von Muffe und Spitzende sowie aus den verwendeten Materialien. So kann der Profilquerschnitt relativ klein gehalten werden, wenn lediglich eine Abdichtung im Bereich des Widerlagers erwünscht ist. Es empfiehlt sich aber, daß der Profilquerschnitt des Dichtringes sich in einen Abdichtungsteil für das Spitzende fortsetzt. Vorzugsweise ist dieses Abdichtungsteil mit weiteren Verankerungsfüßen versehen, so daß es nicht innerhalb des Fußbereiches verrutschen kann. Das Abdichtungsteil für das Spitzende kann auch noch mit zur Spitzenden-Außenseite zeigenden Seite mit Rippen oder Vorsprüngen versehen sein.

Grundsätzlich kann dieses Abdichtungsteil auch lediglich als Hilfs- oder Übergangsprofilteil dienen. In einem solchen Falle wird es entweder zweiteilig mit dem übrigen Profil ausgeführt oder aber über eine Sollbruchstelle mit dem Ringteil, des den Aufnahmeraum umfaßt, verbunden.

Vorzugsweise sollte die Anlaufschräge mit einem Gleitmittel versehen sein. Derartige Gleitmittel sind bekannt. Es lassen sich zum Beispiel Wachse nennen, aber auch anorganische Gleitsubstanzen, wie Molybdänsulfid oder Graphit.

Die Erfindung bezieht sich ferner auf Profilmaterial, aus dem Dichtring-Abschnitte für Dichtringe nach einem der vorgenannten Merkmale ablängbar sind. Die abgelängten Dichtring-Abschnitte werden an ihren Enden mit Hilfe an sich bekannter Vulkanisier- und/oder Klebeverfahren zu einem Ring zusammengefügt.

Die Erfindung bezieht sich schließlich auf einen Schachtring mit einem in ihm verklebten oder verankerten Dichtring mit den vorgenannten Merkmalen sowie auf ein ineinander gefügtes Schachtring-Paar, bei dem die untereinander bestehende Abdichtung durch einen Dichtungsring bewirkt ist.

Ausführungsbeispiele der Erfindung werden in der Zeichnung dargestellt. Die Figuren der Zeichnung zeigen im einzelnen:
- Figuren 1a bis 1c: drei Phasen des Zusammenfügens eines mit einem Dichtring versehenen Muffenteils, in das ein Spitzende eingefügt wird (Querschnittdarstellung);
- Figur 2: eine andere Querschnittsform eines Profils;
- Figur 3: eine dritte Ausführungsform.

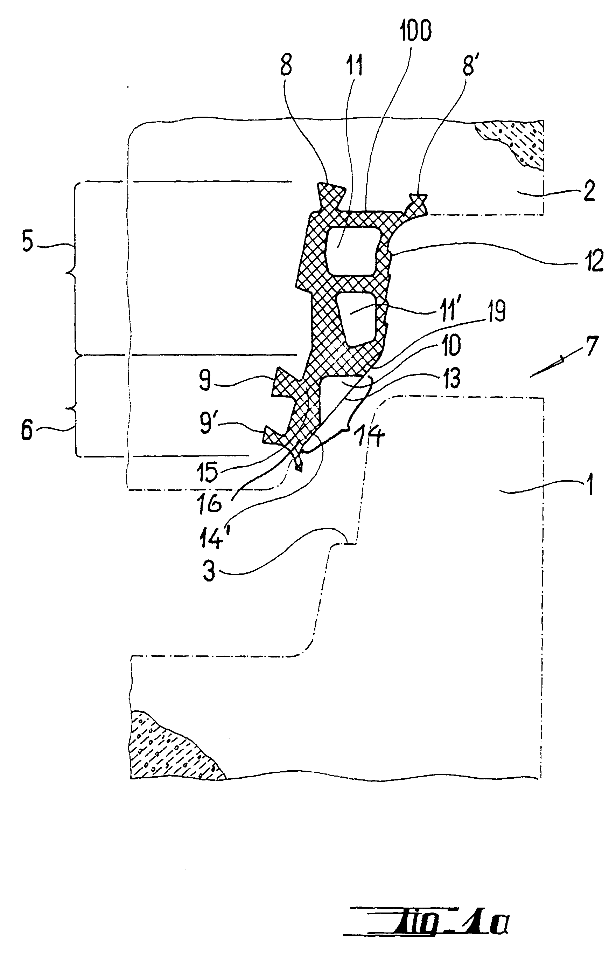

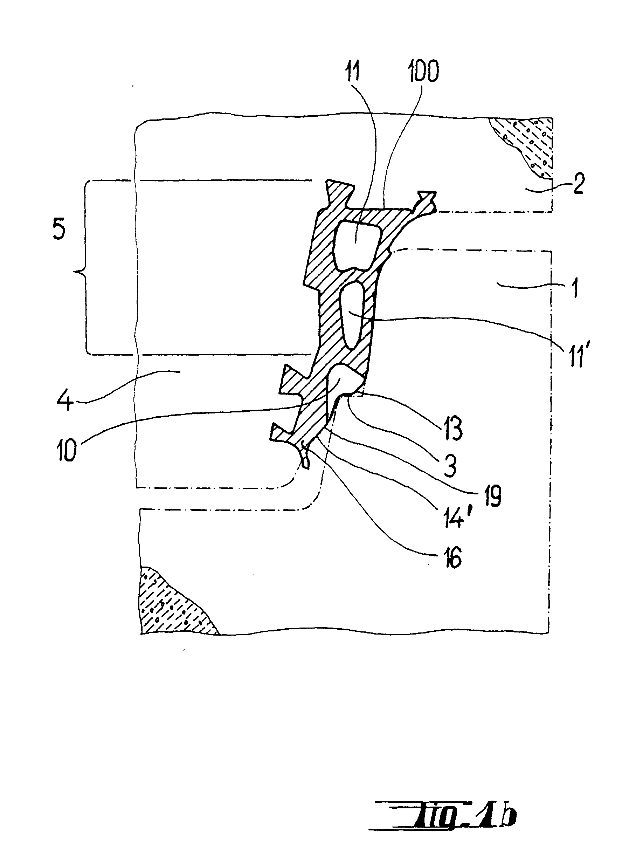

In Figur 1a ist im Querschnitt ein Detail eines Schachtring-Gefüges dargestellt, bei dem auf einen unteren Schachtring 1 ein oberer Schachtring 2 abgedichtet aufgesetzt werden soll. In der in Figur 1a dargestellten Startposititon ist zu erkennen, daß der untere Schachtring 1 im Querschnitt eine Schulter mit einem horizontalen Abschnitt aufweist, die als "Widerlager", Bezugszahl 3, bezeichnet wird. Üblicherweise ist auf das Widerlager lose ein rumdum verlaufender Dichtungsring aufgelegt, der für eine Abdichtung zu einem kompatibel aufgebauten Muffenende des aufliegenden Schachtringes 2 sorgt. Von dieser bekannten Abdichtung ist jedoch im vorliegenden Fall abgewichen worden.

In das Muffenende 4 des oberen Schachtringes 2 ist bei der Herstellung des Rohres ein Dichtring 100 eingelegt und verankert worden. Derartige verankerte Dichtringe weisen eine besonders gute Dichtwirkung auf. Der Dichtring 100 hat im vorliegenden Falle eine sich in zwei Teile gliedernde Form, nämlich einen Abdichtungsteil 5 für das Spitzende 7 und einen Ringteil 6, der einen noch zu beschreibenden Aufnahmeraum 10 umfaßt. Die beiden Teile sind jeweils mit Verankerungsfüßen 8, 8' bzw. 9, 9' versehen, die sich im Querschnitt des Betons verankern.

Das Abdichtungsteil 5 ist mit relativ großen Hohlräumen 11, 11' versehen, um nachgiebig zu sein. An seiner zur Spitzenden-Außenseite zeigenden Seite ist das Abdichtungsteil mit Rippen und Vorsprüngen 12 versehen.

Ein weiterer Hohlraum, der als Aufnahmeraum 10 bezeichnet ist, findet sich im Ringteil 6. Der Aufnahmeraum 10 ist zum Spitzende mit einer Abdeckung 13 in Form einer festen Haut verschlossen. Die Abdeckung 13 sowie die darüber und darunter liegenden Wandbereiche bilden eine in Flucht liegende Anlaufschräge 14 einer Schrägschulter 15. Um das Einfügen der Kante des Widerlagers 3 zu erleichtern, ist der untere, freiliegende Teil 16 der Schrägschulter 15 mit Material des Dichtrings hinterlegt. Im Mittelbereich der Schrägschulter 15 dagegen ist der Aufnahmeraum 10 vorgesehen, wobei dieser einen Teilbereich der Schrägschulter darstellt. Die Form des Aufnahmeraumes richtet sich nach der Größe und Gestalt des Widerlagers 3. Die Abdeckung 13 ist dabei vorzugsweise nur etwa 0,5 bis 2 mm dick.

Figur 1b zeigt den ersten Kontakt der Schulter des Widerlagers 3 mit dem Bereich 14', der sich praktisch nicht verformt, sondern das Widerlager 3 zentrierend in Richtung der nach oben sich fortsetzenden Anlaufschräge 14 eindrückt und einfügt. Allerdings ist der Dichtungsring 100 im Bereich des oberen Abdichtungsteils 5 durch das Spitzende 1 zusammengedrückt. Infolgedessen werden Hohlräume 11, 11', sowie der Aufnahmeraum 10 verformt. Die Abdeckung 13 des Aufnahmeraumes 10 gibt, wie erkennbar, etwas nach, unter Belassung der im wesentlichen ebenen Anlaufschräge 14.

Figur 1c zeigt den Endzustand. Die waagerecht verlaufenden Teile von Spitzende und Muffe liegen im Außenbereich aufeinander, während die Schulter des Widerlagers 3 sich in den Aufnahmeraum 10 eingeschoben hat, wobei die Abdeckung 13 entweder reißt oder sich unter Verformung an die Innenwand des Aufnahmeraumes 10 anlegt. Das Spitzende drängt an den Abdichtungsteil 5 des Dichtringes mit maximaler Kraft, wobei sich dieses Teil weiter verformt und die Vorsprünge 12 eine hervorragende Wasserdichtheit gewährleisten, auch wenn im dortigen Bereich Lunker vorhanden sein sollten.

Der den Aufnahmeraum 10 umfassende Ringteil 6 erlaubt damit eine vollständige Aufnahme und Kompatiblität von Muffe und Spitzende, insbesondere wenn letzteres mit einem Widerlager 3 versehen ist. Es läßt sich damit eine wesentliche Verbesserung der Abdichtung bei herkömmlichen Schachtringen gegenüber lose eingelegten Dichtringen erreichen.

Die Anlaufschräge 14 kann auch mit einem Gleitmittel 19 versehen sein, beispielsweise einem Wachs oder einem anorganischen Gleitmittel, wie Molybdänsulfid. Alternativ kann das Spitzende mit einem Gleitmittel versehen oder eingestrichen sein.

Der Aufnahmeraum 10 bei der in den Figuren la bis 1c dargestellten Ausführungsform kann sowohl mit Luft als auch mit Kunststoffschaum, vorzugsweise in Form eines Schaumstranges gefüllt sein. Ein solcher Schaumstrang kann aus geschäumtem Gummi, gegebenenfalls aber auch aus anderen Materialien bei der Extrusion bzw. Coextrusion des Strangmaterials hergestellt werden.

Im vorliegenden ist der Dichtring 100 in dem Betonmaterial des Muffenteils 1 verankert. Es soll aber nicht ausgeschlossen sein, daß andere Befestigungsmittel, beispielsweise formschlüssiges Einlegen oder Verkleben, als Befestigung ausreichend sind.

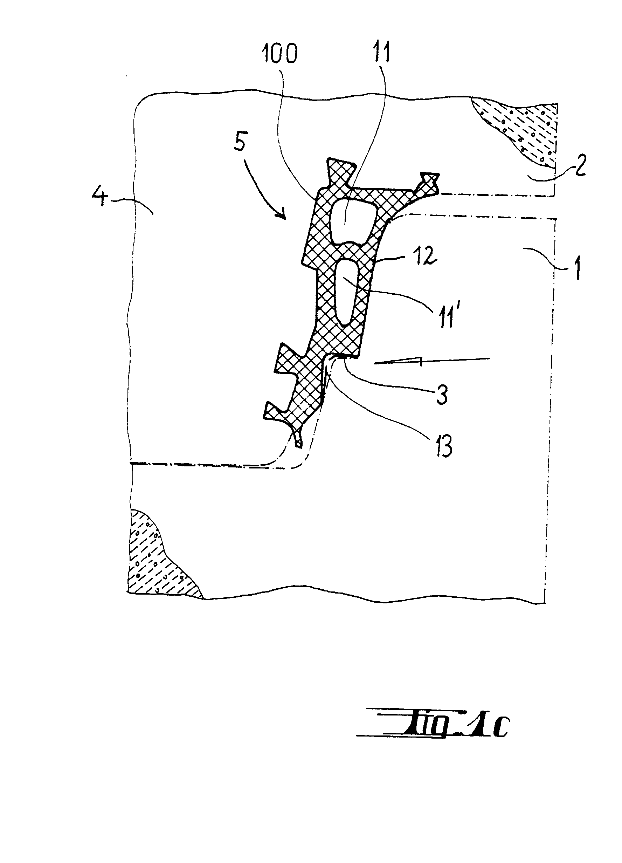

Figur 2 zeigt eine andere Ausführungsform des Profiles des Dichtringes. Hier ist der Aufnahmeraum 20 nicht mit einer Abdeckung versehen, sondern öffnet sich nach außen frei. Die Verwendung eines solchen Profiles erfordert allerdings eine besonders saubere Verarbeitung und Herstellung, da nicht immer ausgeschlossen werden kann, daß sich Fremdkörper, wie Kiesel oder Betonabbruchstücke, in den Aufnahmraum 20 einlegen können. Um dieses zu vermeiden, wird alternativ vorgeschlagen, den Aufnahmraum mit einem pastösen, beim Einrücken des Widerlagers sich herausquetschenden Materials zu versehen, zum Beispiel mit einer gelatineartigen Flüssigkeit, mit Bitumen-Emulsion oder einem anderen thixotropen Material. Es ist auch möglich, den Aufnahmeraum 20 mit einem elastischen Material auszuschäumen, beispielsweise elastisch eingestelltem Polyurethan-Schaum.

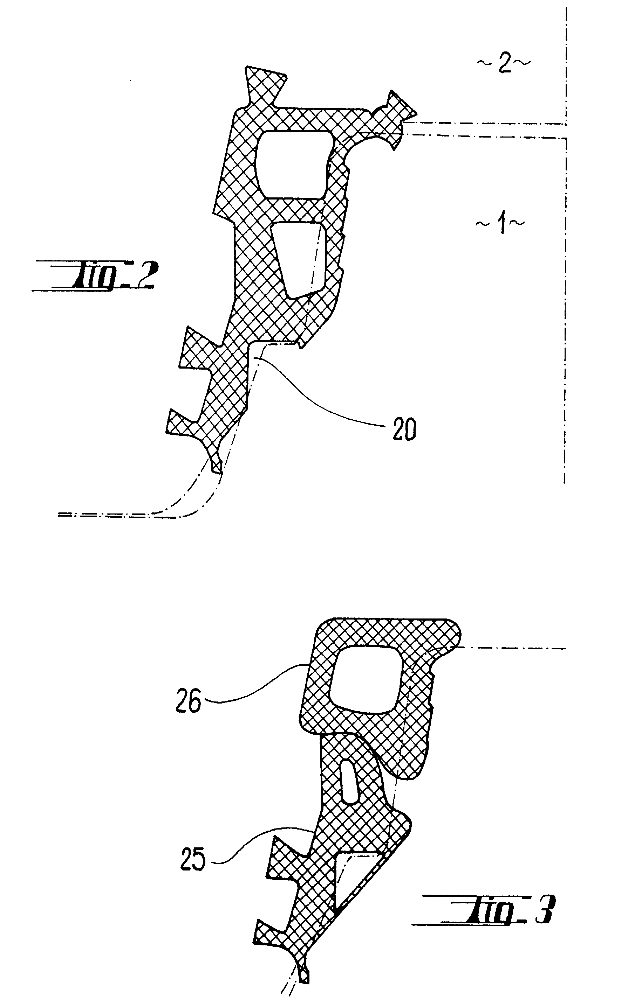

Figur 3 zeigt eine Ausführungsform, bei der der Dichtring zweiteilig hergestellt ist, nämlich aus einem Abdichtungsteil 26 und einem Ringteil 25, wobei das Ringteil 25 im Beton verankert ist, während das Abdichtungsteil 26 auch nach dem Einbringen und Einsetzen wieder entfernt werden kann. Es soll ferner nicht ausgeschlossen werden, daß im Bereich der sich aufeinandersetzenden Betonflächen Muffe und Spitzende ein weiterer, kissenartiger Ring aufgesetzt wird, der dafür sorgt, daß eine Beschädigung der aufeinander drückenden Betonflächen vermieden wird.

Die beschriebenen Dichtringe werden aus für derartige Dichtringe an sich bekanntem, elastomeren Profilmaterial, z.B. Kautschuk, hergestellt, und zwar aus einem extrudierten Profilmaterial, aus dem Dichtring-Abschnitte durch Dichtringe geschnitten werden, die anschließend an den Schnittstellen zu einem Ring verschweißt oder vulkanisiert werden.

## Patentansprüche

1. Dichtring (100), für Schachtring-Aufbauten, der im Bereich der Fügung zwischen Spitzende (7) und Muffenteil (4) zweier aufeinanderliegender Beton-Schachtringe (1,2) anzuordnen ist, wobei das am Spitzende vorhandene Widerlager (3) im zusammengefügten Zustand der Betonschachtringe den Dichtring (100) kontaktiert, der den Abstand zwischen Widerlager und Muffenteil überbrückt und unter Verformung abdichtet, dadurch gekennzeichnet, daß der Dichtring (100) zur Befestigung am Muffenteil (4) vorgesehen ist, und im Bereich seines Kontaktes mit dem Widerlager (3) eine Schrägschulter (15) mit einer innenliegenden Anlaufschräge (14) aufweist, unter der in einem Teilbereich ein das Widerlager (3) aufeinanderliegenden Betonschachtringen aufnehmender Aufnahmeraum (10) vorgesehen ist, wobei ein das Einfügen erlaubender Teil (14') der Schrägstrecke entlang der Anlaufschräge (14) außerhalb des Teilbereiches für den Aufnahmeraum (10) verbleibt.

2. Dichtring nach Anspruch 1, dadurch gekennzeichnet, daß dieser verankerbar oder verklebbar ist.

3. Dichtring nach Anspruch 1 oder 2, dadurch gekennzeichnet, daß der Aufnahmeraum (10) materialfrei ist.

4. Dichtring nach Anspruch 1 oder 2, dadurch gekennzeichnet, daß der Aufnahmeraum (10) mit pastösem, vorzugsweise thixotropem Material gefüllt ist.

5. Dichtring nach Anspruch 1 oder 2, dadurch gekennzeichnet, daß der Aufnahmeraum (10) mit geschäumtem Material gefüllt ist.

6. Dichtring nach Anspruch 1 bis 5, dadurch gekennzeichnet, daß der Aufnahmeraum (10) mit einer mit der Anlaufschräge (14) fluchtenden Abdeckung (13) versehen ist.

7. Dichtring nach Anspruch 6, dadurch gekennzeichnet, daß der Aufnahmeraum (10) mit Luft gefüllt ist.

8. Dichtring nach Anspruch 5 oder 6, dadurch gekennzeichnet, daß der Aufnahmeraum (10) mit Kunststoffschaum, vorzugsweise in Form eines mit dem übrigen Ringmaterial coextrudierten Schaumstranges, gefüllt ist.

9. Dichtring nach wenigstens einem der vorhergehenden Ansprüche, dadurch gekennzeichnet, daß sich der Profilquerschnitt des Dichtringes in einen Abdichtungsteil (5) für das Spitzende (7) fortsetzt.

10. Dichtring nach Anspruch 9, dadurch gekennzeichnet, daß das Abdichtungsteil (5) für das Spitzende mit weiteren Verankerungsfüßen (8, 8') versehen ist.

11. Dichtring nach Anspruch 9 oder 10, dadurch gekennzeichnet, daß das Abdichtungsteil (5) für das Spitzende mit zur Spitzenden-Außenseite zeigenden Seite mit Rippen oder Vorsprüngen (12) versehen ist.

12. Dichtring nach Anspruch 9 bis 11, dadurch gekennzeichnet, daß das Abdichtungsteil (5) für das Spitzende über eine Sollbruchstelle mit dem Ringteil (5), der den Aufnahmeraum (10) umfaßt, verbunden ist.

13. Dichtring nach Anspruch 9 bis 11, dadurch gekennzeichnet, daß das Abdichtungsteil (26) für das Spitzende und das Ringteil (25), das den Aufnahmeraum (10) umfaßt, zweiteilig ausgeführt ist.

14. Profilhalbzeug, aus dem Dichtring-Abschnitte für Dichtringe nach einem der Ansprüche 1 bis 13 ablängbar sind.

15. Schachtring mit einem in ihm verklebten oder verankerten Dichtring nach wenigstens einem der vorhergehenden Ansprüche 1 bis 13.

16. Ineinander gefügtes Schachtring-Paar, bei dem die untereinander bestehende Abdichtung durch einen Dichtungsring nach wenigstens einem der vorhergehenden Ansprüche 1 bis 13 bewirkt ist.

## Claims

1. A sealing ring (100) for manhole-shaft rings for disposing in the region of the joint between the spigot end (7) and the socket part (4) of two superposed manhole-shaft rings (1, 2) of concrete wherein, when the manhole-shaft rings are fitted together, the abutment (3) on the spigot end contacts the sealing ring (100) which bridges the space between the abutment and the socket part and seals it while undergoing deformation, characterised in that the sealing ring (100) is provided for fixing to the socket part (4) and, at the region where it makes contact with the abutment (3), has a sloping shoulder (15) with an internal thrust slope (14) under which, in a partial region, a space (10) is provided for receiving the abutment (3) of superposed manhole-shaft rings, wherein a part (14') of the slope permitting insertion is left along the thrust slope (14) outside the partial region for the receiving space (10).

2. A sealing ring according to claim 1, characterised in that it can be anchored or stuck.

3. A sealing ring according to claim 1 or 2,
characterised in that the receiving space (10) is free from material.

4. A sealing ring according to claim 1 or 2,
characterised in that the receiving space (10) is filled with pasty, preferably, thixotropic, material.

5. A sealing ring according to claim 1 or 2,
characterised in that the receiving space (10) is filled with foamed material.

6. A sealing ring according to claims 1 to 5,
characterised in that the receiving space (10) has a cover (13) in line with the thrust slope (14).

7. A sealing ring according to claim 6, characterised in that the receiving space (10) is filled with air.

8. A sealing ring according to claim 5 or 6,
characterised in that the receiving space (10) is filled with plastic foam, preferably in the form of a strand co-extruded with the remaining ring material.

9. A sealing ring according to at least one of the preceding claims, characterised in that the profile cross-section of the sealing ring continues in a part (5) for sealing the spigot end (7).

10. A sealing ring according to claim 9, characterised in that the part (5) for sealing the spigot end is provided with additional anchoring feet (8, 8').

11. A sealing ring according to claim 9 or 10,
characterised in that the part (5) for sealing the spigot end is provided with ribs or projections (12) on the side towards the outside of the spigot end.

12. A sealing ring according to claims 9 to 11,
characterised in that the part (5) for sealing the spigot end is connected via a set breaking place to the ring part (5) comprising the receiving space (10).

13. A sealing ring according to claims 9 to 11,
characterised in that the part (26) for sealing the spigot end and the ring part (25) comprising the receiving space (10) are in two parts.

14. A semifinished profile product from which portions can be cut to length for sealing rings according to any of claims 1 to 13.

15. A manhole-shaft ring in which a sealing ring according to at least one of the preceding claims 1 to 13 is stuck or anchored.

16. A pair of fitted-together manhole-shaft rings, sealed to one another by a sealing ring according to at least one of the preceding claims 1 to 13.

## Revendications

1. Bague d'étanchéité (100) pour structures d'anneaux de puits qui doit être agencée dans la zone de la jointure ou emboîtement entre l'extrémité (7) de pointe et l'élément de manchon (4) de deux anneaux superposés (1, 2) de puits en béton, où la butée (3) présente à l'extrémité de pointe est, dans l'état emboîté des anneaux de puits en béton, au contact de la bague d'étanchéité (100) qui franchit la distance entre la butée et l'élément de manchon et assure l'étanchéité en se déformant, caractérisée en ce que la bague d'étanchéité (100) est prévue pour être fixée sur l'élément de manchon (4) et comporte, dans la zone de son contact avec la butée (3), un épaulement oblique (15) qui comporte un biseau interne d'arrêt (14) au-dessous duquel un espace de réception (10) qui reçoit la butée (3) lorsque les anneaux de puits en béton sont superposés est prévu dans une zone partielle, un élément (14') de l'étendue oblique qui permet l'insertion restant le long du biseau d'arrêt (14) en dehors de la zone partielle destinée à l'espace de réception (10).

2. Bague d'étanchéité selon la revendication 1, caractérisée en ce qu'elle peut être ancrée ou collée.

3. Bague d'étanchéité selon la revendication 1 ou 2, caractérisée en ce que l'espace de réception (10) n'inclut aucune matière.

4. Bague d'étanchéité selon la revendication 1 ou 2, caractérisée en ce que l'espace de réception (10) est rempli d'une matière pâteuse, de préférence thixotrope.

5. Bague d'étanchéité selon la revendication 1 ou 2, caractérisée en ce que l'espace de réception (10) est rempli d'une matière alvéolaire.

6. Bague d'étanchéité selon l'une quelconque des revendications 1 à 5, caractérisée en ce que l'espace de réception (10) est pourvu d'un revêtement (13) aligné avec le biseau d'arrêt (14).

7. Bague d'étanchéité selon la revendication 6, caractérisée en ce que l'espace de réception( 10) est rempli d'air.

8. Bague d'étanchéité selon la revendication 5 ou 5, caractérisée en ce que l'espace de réception (10) est rempli d'une matière plastique alvéolaire, de préférence en forme de cordon alvéolaire coextrudé avec le reste de la matière de la bague.

9. Bague d'étanchéité selon l'une quelconque des revendications précédentes, caractérisée en ce que le profil en coupe transversale de la bague d'étanchéité se poursuit en un élément d'étanchéité (5) pour l'extrémité (7) de pointe.

10. Bague d'étanchéité selon la revendication 9, caractérisée en ce que l'élément d'étanchéité (5) pour l'extrémité de pointe est pourvu de pattes additionnelles d'ancrage (8, 8').

11. Bague d'étanchéité selon la revendication 9 ou 10, caractérisée en ce que l'élément d'étanchéité (5) pour l'extrémité de pointe est pourvu de nervures ou de saillies (12) sur son côté tourné vers le côté extérieur de l'extrémité de pointe.

12. Bague d'étanchéité selon l'une quelconque des revendications 9 à 11, caractérisée en ce que l'élément d'étanchéité (5) pour l'extrémité de pointe est reliée, par l'intermédiaire d'un emplacement destiné à la rupture, à l'élément (5) de bague qui comprend l'espace de réception( 10).

13. Bague d'étanchéité selon l'une quelconque des revendications 9 à 11, caractérisée en ce que l'élément d'étanchéité (26) pour l'extrémité de pointe et l'élément (25) de bague qui comprend l'espace de réception (10) sont réalisés en deux éléments.

14. Produit semi-fini profilé à partir duquel des éléments de bague d'étanchéité destinés à des bagues d'étanchéité selon l'une quelconque des revendications 1 à 13, peuvent être coupées à longueur.

15. Anneau de puits pourvu d'une bague d'étanchéité selon l'une au moins des revendications précédentes 1 à 13, qui est collée ou ancrée à l'intérieur de cet anneau.

16. Paire d'anneaux de puits emboîtés l'un dans l'autre, dans laquelle l'étanchéité existant entre les deux éléments est effectuée par une bague d'étanchéité selon l'une au moins des revendications précédentes 1 à 13.
